# EUROPÄISCHE PATENTSCHRIFT

(11) **EP 2 362 107 B1**
(45) Veröffentlichungstag und Bekanntmachung des Hinweises auf die Patenterteilung: **04.03.2015**
(21) Anmeldenummer: 11152032.6
(22) Anmeldetag: 25.01.2011
(51) Int. Cl.: F16B 19/10, F16B 5/06

(54) **Spannniet**
Tension rivet
Rivet de serrage

(30) Priorität: 18.02.2010 DE 102010008457
(43) Veröffentlichungstag der Anmeldung: 31.08.2011
(73) Patentinhaber: A. RAYMOND et Cie, 38000 Grenoble (FR)
(72) Erfinder: Büsch, Martin, 79588, Efringen-Kirchen (DE)
(74) Vertreter: RACKETTE Partnerschaft Patentanwälte

(56) Entgegenhaltungen:
- EP-A1- 1 698 785
- DE-A1- 2 341 708
- DE-B3-102004 020 039
- DE-B3-102005 062 242
- JP-A- 2004 332 848
- US-A- 4 636 121

## Beschreibung

Die Erfindung betrifft einen Spannniet gemäß dem Oberbegriff des Patentanspruches 1.

Ein derartiger Spannniet ist aus DE 10 2005 062 242 B3 bekannt. Der vorbekannte Spannniet weist einen Einsatzkörper auf, der über einen Auflageteller und über einen mit dem Auflageteller verbundenen Fußschaft verfügt. Der Fußschaft ist mit wenigstens zwei jeweils eine Hintergriffnase aufweisenden Federarmen ausgebildet. Weiterhin ist ein Einschiebestift vorhanden, der zum Blockieren der Federarme gegen ein Einfedern radial nach innen in den Fußschaft einschiebbar ist.

Aus DE 16 25 477 A ist ein Spreizdübel mit einer Anzahl von Spreizarmen bekannt, an deren Außenseiten gewindeartig ausgebildete Rippenstrukturen vorhanden sind.

Der Erfindung liegt die Aufgabe zugrunde, einen Spannniet der eingangs genannten Art anzugeben, der in einer Vormontageanordnung verliersicher an einer Anordnung aus einem Anbauteil und aus einem Trägerteil anbringbar ist.

Diese Aufgabe wird bei einem Spannniet der eingangs genannten Art erfindungsgemäß mit den kennzeichnenden Merkmalen des Patentanspruches 1 gelöst.

Dadurch, dass bei dem erfindungsgemäßen Spannniet an dem Fußschaft ein Gewindering ausgebildet ist, der sich von einem dem Auflageteller abgewandten Fußende spiralförmig um den Fußschaft bis wenigstens zu der oder jeder dem Auflageteller nächstliegenden Hintergriffnase erstreckt, lässt sich der Spannniet zum Einnehmen einer Vormontagestellung in eine Anordnung aus einem Anbauteil und einem Trägerteil einschrauben und gegenüber einem alleinigen Vorsehen von Hintergriffnasen höheren Auszugskraft in der Vormontagestellung gegen ein unbeabsichtigtes Lösen sichern. Nach Einschieben des Einschiebestiftes in den Fußschaft sind dann die Federarme gegen ein Einfedern radial nach innen blockiert, so dass sie nunmehr die Blockierfunktion im wesentlichen alleine ausüben. Nach einem Herausziehen des Einschiebestiftes aus dem Fußschaft mit Freigeben der Federarme ist in Abhängigkeit der Ausgestaltung des Gewinderinges in dem dem Auflageteller zugewandten Bereich der Spannniet lösbar oder unlösbar fixiert.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von bevorzugten Ausführungsbeispielen unter Bezug auf die Figuren der Zeichnung.

Es zeigen:
- Fig. 1: in einer perspektivischen Ansicht ein Ausführungsbeispiel eines erfindungsgemäßen lösbaren Spannniets mit zwei Federarmen,
- Fig. 2: in einer Seitenansicht das Ausführungsbeispiel gemäß Fig. 1 in einer ein Trägerteil und ein Auflageteil miteinander verbindenden Endmontagestellung,
- Fig. 3: in einer Schnittansicht das Ausführungsbeispiel gemäß Fig. 1 in der Endmontagestellung gemäß Fig. 2,
- Fig. 4: in einer perspektivischen Ansicht ein weiteres Ausführungsbeispiel eines erfindungsgemäßen lösbaren Spannniets mit vier Federarmen,
- Fig. 5: in einer perspektivischen Ansicht ein Ausführungsbeispiel eines erfindungsgemäßen unlösbaren Spannniets mit zwei Federarmen,
- Fig. 6: in einer Seitenansicht das Ausführungsbeispiel gemäß Fig. 5 in einer ein Trägerteil und ein Auflageteil miteinander verbindenden Endmontagestellung,
- Fig. 7: in einer Schnittansicht das Ausführungsbeispiel gemäß Fig. 5 in der Endmontagestellung gemäß Fig. 6,
- Fig. 8: in einer Seitenansicht ein weiteres Ausführungsbeispiel eines erfindungsgemäßen lösbaren Spannniets mit zwei Federarmen,
- Fig.9: in einem Querschnitt das Ausführungsbeispiel gemäß Fig. 8 und
- Fig. 10: in einer Draufsicht auf ein Trägerteil eine Ausführung einer eine Ausklinkung aufweisenden Spannnietaufnahmeausnehmung.

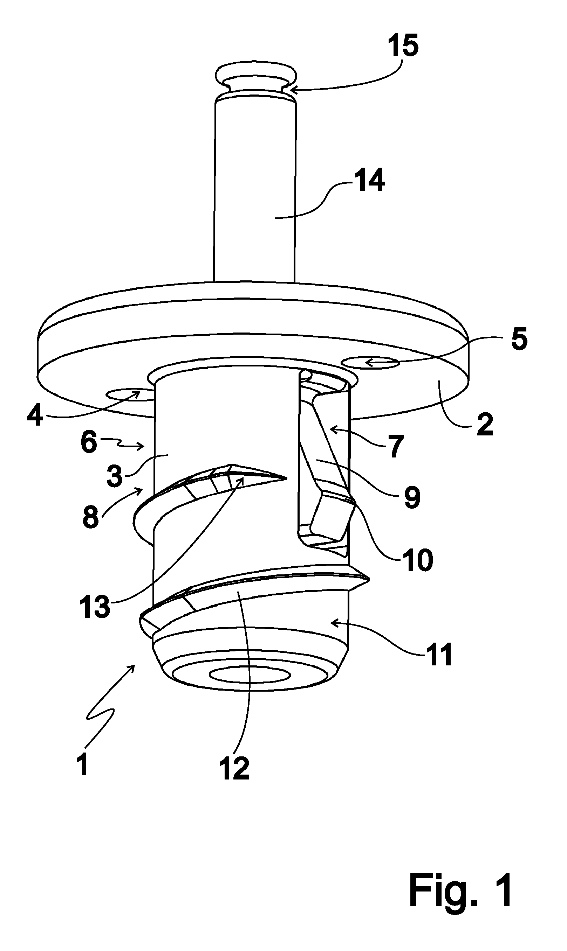

Fig. 1 zeigt in einer perspektivischen Ansicht ein Ausführungsbeispiel eines erfindungsgemäßen lösbaren Spannniets. Der erfindungsgemäße Spannniet gemäß Fig. 1 verfügt über einen Einsatzkörper 1, der einen scheibenartigen Auflageteller 2 und einen an den Auflageteller 2 angeformten, sich in einer Längsrichtung des Spannniets erstreckenden hohlzylinderartigen Fußschaft 3 aufweist.

Der Auflageteller 2 ist mit wenigstens einer, vorzugsweise jedoch mit wenigstens zwei Werkzeugeingriffsausnehmungen 4, 5 ausgebildet, in das beziehungsweise in die ein in Fig. 1 nicht dargestelltes Werkzeug zum Drehen des Einsatzkörpers 1 einführbar ist.

Der Fußschaft 3 bei dem Ausführungsbeispiel gemäß Fig. 1 weist zwei Armausnehmungen 6, 7 auf, in denen jeweils ein Federarm 8, 9 angeordnet ist. Jeder Federarm 8, 9 ist mit einem Ende beispielsweise wie in Fig. 1 dargestellt im Bereich des Auflagetellers 2 an den Einsatzkörper 1 angebunden.

Bei einer nicht dargestellten Abwandlung sind die Federarme 8, 9 jeweils an dem dem Auflageteller 2 abgewandten Ende der Armausnehmungen 6, 7 angebunden.

Jeder Federarm 8, 9 ist mit einer Hintergriffnase 10 ausgebildet, die radial nach außen über den Fußschaft 3 überstehen. Die Federarme 8, 9 sind so ausreichend flexibel und freigestellt, dass bei Ausüben einer vorbestimmten Montagekraft die Federarme 8, 9 radial nach innen einfedern können, bis die Hintergriffnasen 10 bündig mit dem Umfang des Fußschaftes 3 abschließen.

Weiterhin lässt sich Fig. 1 entnehmen, dass bei dem dargestellten Ausführungsbeispiel der Fußschaft 3 mit einem dem Auflageteller 2 abgewandten, umfänglich geschlossenen Fußende 11 ausgebildet ist. Von dem Fußende 11 erstreckt sich spiralförmig in Richtung des Auflagetellers 2 ein Gewindering 12, der aufgrund von zwei geneigt zueinander ausgerichteten Seitenflächen einen im wesentlichen dreieckförmigen Querschnitt aufweist. Bei dem in Fig. 1 dargestellten Ausführungsbeispiel weist der Gewindering 12 über seine gesamte Länge, die bei diesem Ausführungsbeispiel etwa dem 1,5-fachen des Umfangs des Fußschaftes 3 entspricht, eine kontinuierliche, in Richtung des Auflagetellers 2 weisende Steigung auf und läuft in einem zwischen den Hintergriffnasen 10 und dem Auflageteller 2 liegenden Abschnitt des Fußschaftes 3 mit einem in radialer Richtung bis zu der Außenfläche des Fußschaftes 3 zurückgenommenen, auslaufenden Endabschnitt 13 aus.

Der erfindungsgemäße Spannniet gemäß Fig. 1 ist weiterhin mit einem zylinderförmigen massiven Einschiebestift 14 ausgestattet, der in dem Fußschaft 3 verschiebbar gehalten und an seinem dem Fußschaft 3 abgewandten Ende mit einer umfänglich umlaufenden Auszugskerbe 15 ausgebildet ist.

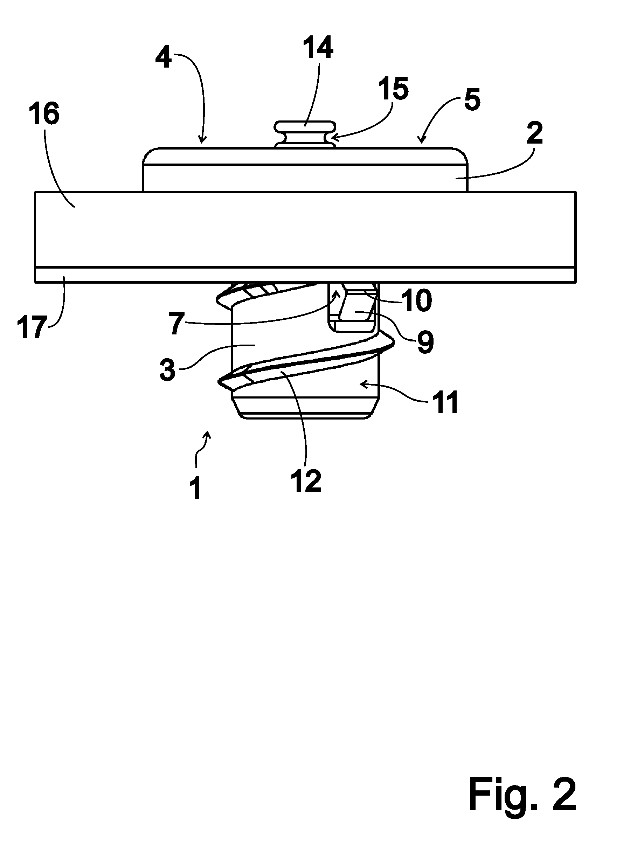

Fig. 2 zeigt in einer Seitenansicht das Ausführungsbeispiel eines erfindungsgemäßen Spannniets gemäß Fig. 1 in einer Endmontagestellung beim Befestigen eines Anbauteiles 16 an einem Trägerteil 17, in der der Einschiebestift 14 bis auf die in Längsrichtung über den Auflageteller 2 überstehende Auszugskerbe 15 im wesentlichen vollständig in den Fußschaft 3 eingeschoben ist. In der Endmontagestellung hintergreifen die Hintergriffnasen 10 das Trägerteil 17 auf seiner dem Anbauteil 16 abgewandten Seite, während der Auflageteller 2 auf der dem Trägerteil 17 abgewandten Seite des Anbauteiles 16 aufliegt.

Die Endmontagestellung wurde dabei über die in Fig. 1 dargestellte Vormontagestellung eingenommen, ausgehend von der der erfindungsgemäße Spannniet durch Einwirken in die oder jede Werkzeugausnehmung 4, 5 eingreifenden Werkzeugs unter Heranziehen des Anbauteiles 16 an das Trägerteil 17 soweit in die Anordnung aus Anbauteil 16 und Trägerteil 17 eingedreht worden ist, bis die Hintergriffnasen 10 das Trägerteil 17 auf der dem Anbauteil 16 abgewandten Seite hintergreifen. In dieser Vormontagestellung sichert der Gewindering 12 zusätzlich zu den Hintergriffnasen 10 den Einsatzkörper 1 an der Anordnung aus Anbauteil 16 und Trägerteil 17, wobei durch das Ausbilden des Gewinderinges 12 mit einer kontinuierlichen Steigung bei Eingriff des dem Auflageteller 2 zugewandten Endabschnittes 13 des Gewinderinges 12 mit einer entsprechend dimensionierten Ausklinkung in dem Trägerteil 17 der erfindungsgemäße Spannniet 11 durch Herausdrehen wieder von dem Trägerteil 17 entfernbar ist, sobald der Einschiebestift 14 wieder aus dem Fußschaft 3 herausgezogen worden ist.

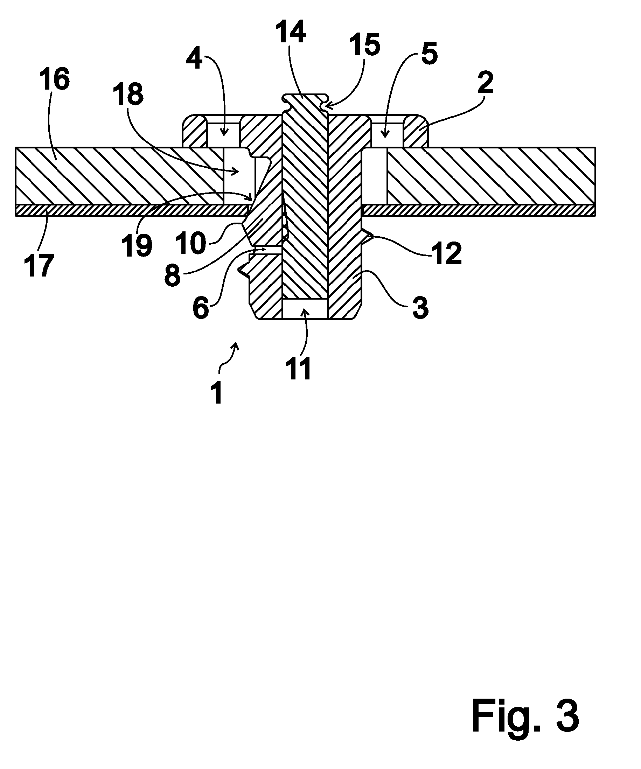

Fig. 3 zeigt in einer Schnittansicht das Ausführungsbeispiel eines erfindungsgemäßen Spannniets in der Endmontagestellung gemäß Fig. 3. Aus Fig. 3 ist ersichtlich, dass in der Endmontagestellung der bis auf die überstehende Auszugskerbe 15 im wesentlichen vollständig in den Fußschaft 3 eingeschobene Einschiebestift 14 in Längsrichtung über die Armausnehmungen 6, 7 hinaus bis in das Fußende 11 eintritt und dadurch die Federarme 8, 9 gegen ein Einfedern radial nach innen blockiert. Dadurch ist der erfindungsgemä-ße Spannniet in der Endmontagestellung gegen sehr hohe Auszugskräfte gesichert an der Anordnung aus Trägerteil 17 und Anbauteil 16 fixiert.

Weiterhin lässt sich der Darstellung gemäß Fig. 3 entnehmen, dass der Gewindering 12 auch beispielsweise als ein das Trägerteil 17 hintergreifendes Notsicherungsmittel dient, falls das Blockieren der Federarme 8, 9 aufgehoben ist. Der Einsatzkörper 1 ist dabei in einer gegenüber dem größten Durchmesser des Fußschaftes 3 mit relaxierten Federarmen 8, 9 größer dimensionierten Durchsteckausnehmung 18 des Anbauteiles 16 angeordnet, während eine in dem Trägerteil 17 eingebrachte Aufnahmeausnehmung 19 so klein dimensioniert ist, dass der Gewindering 12 das Trägerteil 17 auf seiner dem Anbauteil 16 abgewandten Seite hintergreift.

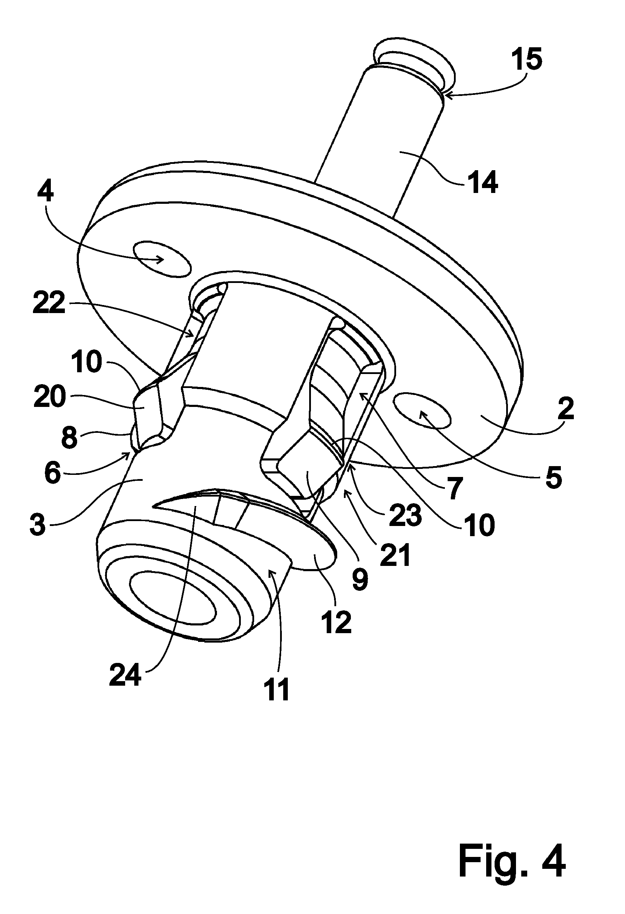

Fig. 4 zeigt in einer perspektivischen Ansicht ein weiteres Ausführungsbeispiel eines erfindungsgemäßen Spannniets, wobei sich bei dem Ausführungsbeispiel gemäß Fig. 1 und bei dem Ausführungsbeispiel gemäß Fig. 4 einander entsprechende Elemente mit den gleichen Bezugszeichen versehen und im weiteren zum Teil nicht näher erläutert sind. Das Ausführungsbeispiel gemäß Fig. 4 verfügt über insgesamt vier Federarme 8, 9, 20, 21, die in zugehörigen Armausnehmungen 6, 7, 22, 23 angeordnet sind. Die Federarme 8, 9, 20, 21 sind paarweise einander diametral gegenüber liegend angeordnet, so dass sie in Umfangsrichtung einen Winkelabstand von jeweils 90 Grad voneinander aufweisen. Die Hintergriffnasen 10 von einander diametral gegenüber liegenden Federarmen 8, 9; 20, 21 sind dabei gegenüber den Hintergriffnasen 10 des anderen, zwischenliegenden Federarmpaares 20, 21; 8, 9 in Längsrichtung des Fußschaftes 3 zueinander versetzt, so dass sich der Spannniet gemäß Fig. 4 durch eine verhältnismäßig große Dickentoleranz bezüglich der Dicke eines in Fig. 4 nicht dargestellten Anbauteiles und eines in Fig. 4 ebenfalls nicht dargestellten Trägerteiles auszeichnet. Weiterhin ergibt sich durch insgesamt vier Federarme 8, 9, 20, 21 eine verhältnismäßig hohe Auszugskraft.

Schließlich lässt sich der Darstellung gemäß Fig. 4 entnehmen, dass, wie im übrigen auch bei dem Ausführungsbeispiel gemäß Fig. 1, der Gewindering 12 an seinem dem Auflageteller 2 abgewandten Ende in einem in radialer Richtung bis zu der Außenfläche des Fußschaftes 3 zurückgenommenen Anfangsabschnittes 24 ausläuft, um ein Einschrauben des Einsatzkörpers 1 in eine in Fig. 4 nicht dargestellte Anordnung aus Anbauteil und Trägerteil zu erleichtern.

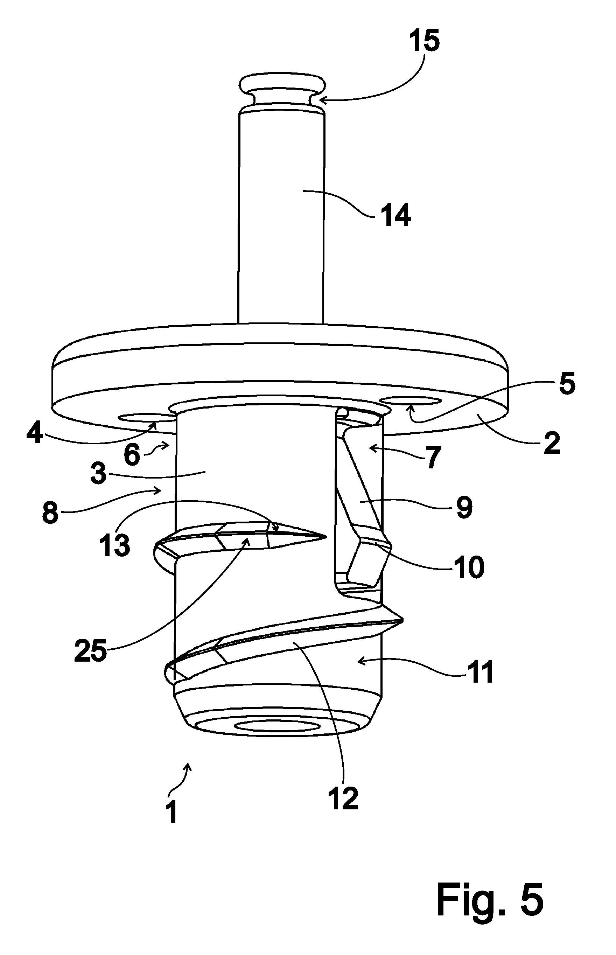

Fig. 5 zeigt in einer perspektivischen Ansicht ein weiteres Ausführungsbeispiel eines erfindungsgemäßen unlösbaren Spannniets mit zwei Federarmen 8, 9, wobei sich bei dem Ausführungsbeispiel gemäß Fig. 1, bei dem Ausführungsbeispiel gemäß Fig. 4 und bei dem Ausführungsbeispiel gemäß Fig. 5 einander entsprechende Elemente mit den gleichen Bezugszeichen versehen und im weiteren zum Teil nicht näher erläutert sind. Bei dem Ausführungsbeispiel gemäß Fig. 5 läuft der Gewindering 12 an seinem dem Auflageteller 2 zugewandten Ende in einem dem Endabschnitt 13 vorgelagerten Auslaufabschnitt 25 steigungslos, das heißt in einer zu der Längsrichtung des Fußschaftes 3 rechtwinkligen Richtung, aus. Dabei ist der Endabschnitt 13 ebenfalls steigungslos angeordnet. Sowohl der Endabschnitt 13 als auch der Auslaufabschnitt 25 liegen dabei in einer gemeinsamen, rechtwinklig zu der Längsrichtung des Fußschaftes 3 ausgerichteten Ebene. Dadurch ist dieser Spannniet nach Eindrehen unlösbar mit einem Trägerteil 17 verbunden, da eine für ein Herausdrehen erforderliche Ausklinkung hierfür so groß dimensioniert werden müsste, dass eine zuverlässige Verankerung des Spannniets nicht mehr gewährleistet wäre.

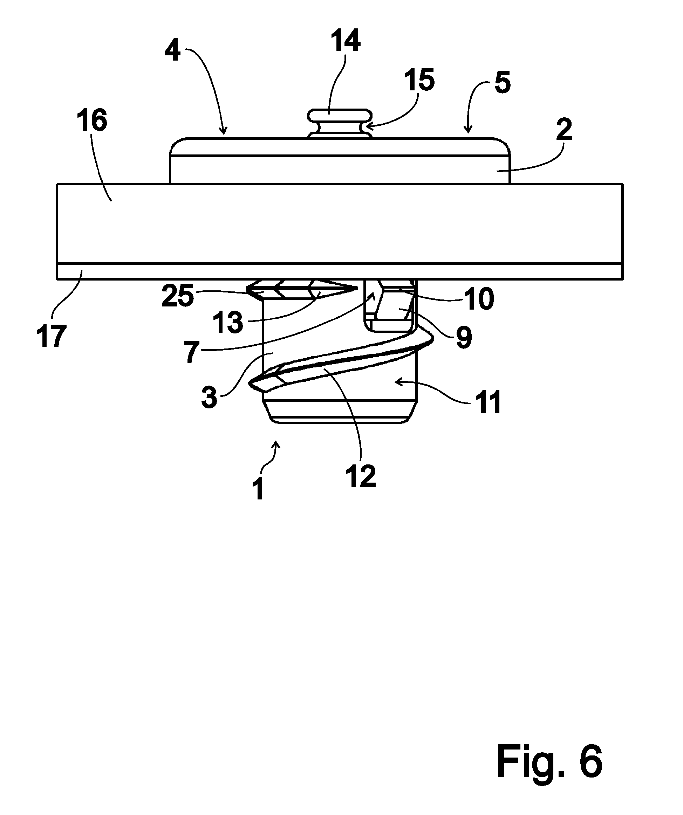

Fig. 6 zeigt in einer Seitenansicht das Ausführungsbeispiel eines erfindungsgemäßen Spannniets gemäß Fig. 6 in einer Endmontagestellung gemäß Fig. 2. Aus Fig. 6 ist ersichtlich, dass der steigungslose Endabschnitt 13 und der steigungslose Auslaufabschnitt 25 das Trägerteil 17 auf seiner dem Anbauteil 16 abgewandten Seite hintergreifen und dadurch selbst bei einem aus dem Fußschaft 3 heraus gezogenen Einschiebestift 14 das Spannniet gegen verhältnismäßig hohe Auszugskräfte widerstandsfähig an dem Trägerteil 17 sichert.

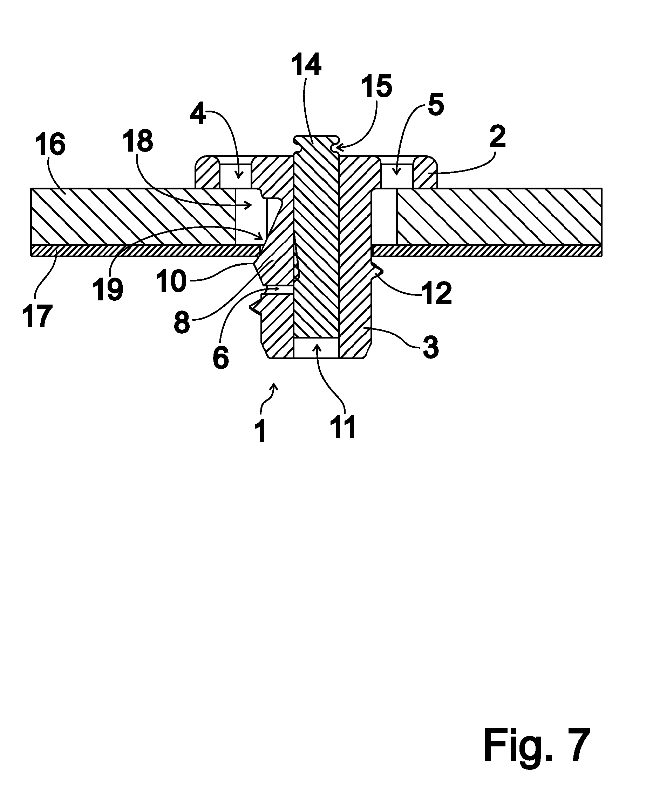

Fig. 7 zeigt in einer Schnittansicht das Ausführungsbeispiel gemäß Fig. 5 in der Endmontagestellung gemäß Fig. 6. Aus Fig. 7 ist ersichtlich, dass der Gewindering 12 in einem sehr geringen bis verschwindenden axialen Abstand von dem Trägerteil 17 ausläuft und zusammen mit den Hintergriffnasen 10 zu einer zuverlässigen, unlösbaren Verankerung an der Anordnung aus Anbauteil 16 und Trägerteil 17 sicherstellt.

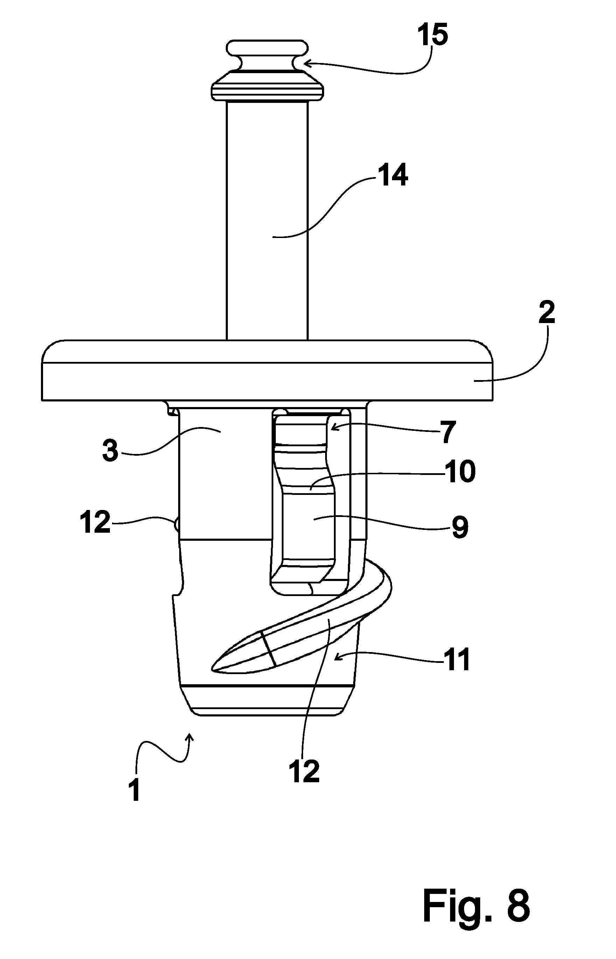

Fig. 8 zeigt in einer Seitenansicht ein weiteres Ausführungsbeispiel eines lösbaren Spannniets, wobei sich bei den Ausführungsbeispielen gemäß Fig. 1 bis Fig. 7 und bei dem Ausführungsbeispiel gemäß Fig. 8 einander entsprechende Elemente mit den gleichen Bezugszeichen versehen und im weiteren nicht näher erläutert sind. Bei dem wie das Ausführungsbeispiel gemäß Fig. 1 bis Fig. 3 mit zwei Federarmen 8, 9 ausgestattete Ausführungsbeispiel gemäß Fig. 8 erstreckt sich der Gewindering 12 über lediglich einen Teil des Umfangs des Fußschaftes 3, so dass mit diesem Ausführungsbeispiel mit einem Eindrehen von weniger als 360 Grad bereits der Hintergriff des in Fig. 8 nicht sichtbaren Endabschnittes 13 erreicht ist. Weiterhin lässt sich der Darstellung gemäß Fig. 8 entnehmen, dass der Gewindering 12 bei diesem Ausführungsbeispiel mit einem flachen Deckabschnitt ausgebildet ist, der sich zwischen angeschrägten Seitenabschnitten erstreckt.

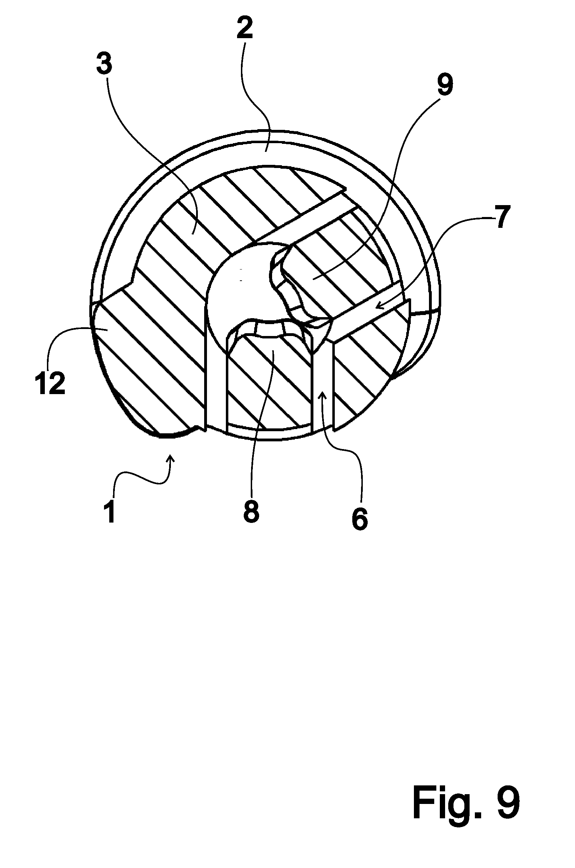

Fig. 9 stellt das Ausführungsbeispiel gemäß Fig. 8 in einem Querschnitt durch die Federarme 8, 9 dar. Aus Fig. 8 ist ersichtlich, dass, wie im übrigen auch bei dem Ausführungsbeispiel gemäß Fig. 1 bis Fig. 3 ausgeführt, die Federarme 8, 9 in einen Winkelabstand von weniger als 180 Grad, hier mit 120 Grad, zueinander angeordnet sind, so dass der Umfang des Fußschaftes 3 über einen Bereich von hier 240 Grad unterbrechungsfrei ist. Dies reduziert das Risiko von Verkantungen beim Eindrehen des Spannniets.

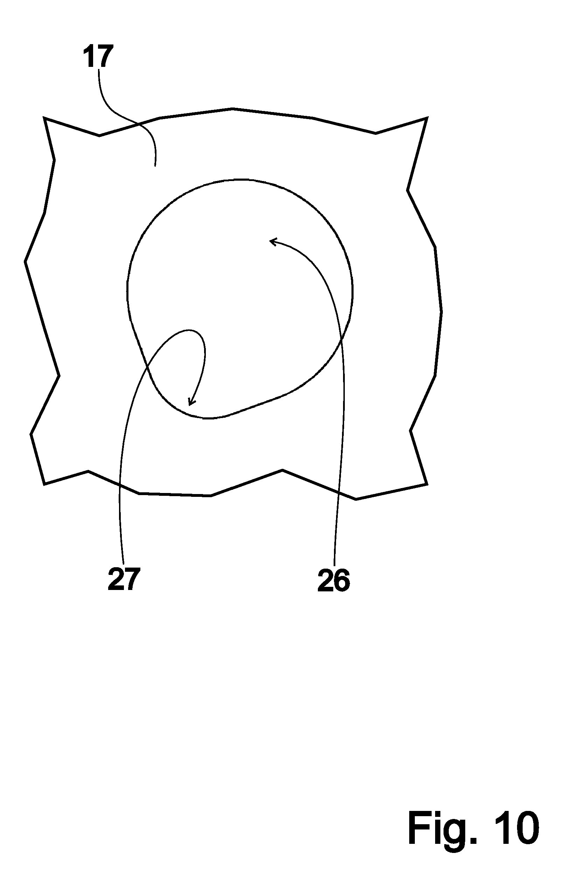

Fig. 10 zeigt in einer Draufsicht auf ein Trägerteil 17 eine Ausführung einer Spannnietaufnahmeausnehmung 26, die über einen Umfang von etwa 270 Grad kreisförmig ausgebildet ist und über einen Umfang von etwa 90 Grad eine den Durchmesser der Spannnietaufnahmeausnehmung 26 gegenüber dem Kreisabschnitt von etwa 270 Grad erweiternde Ausklinkung 27 aufweist. Diese Ausklinkung 27 ist so dimensioniert, dass ein Herausdrehen der voranstehend als lösbar bezeichneten Spannniete möglich ist, wenn die Endabschnitte 13 des Gewinderinges 12 vorzugsweise unter einem gewissen Verkanten des betreffenden Spannniets in die Ausklinkung 27 eintreten.

## Patentansprüche

1. Spannniet mit einem Einsatzkörper (1), der über einen Auflageteller (2) und über einen mit dem Auflageteller (2) verbundenen Fußschaft (3) verfügt, wobei der Fußschaft (3) mit wenigstens zwei jeweils eine Hintergriffnase (10) aufweisenden Federarmen (8, 9, 20, 21) ausgebildet ist, und mit einem Einschiebestift (14), der zum Blockieren der Federarme (8, 9, 20, 21) gegen ein Einfedern radial nach innen in den Fußschaft (3) einschiebbar ist, **dadurch gekennzeichnet, dass** an dem Fußschaft (3) ein Gewindering (12) ausgebildet ist, der sich von einem dem Auflageteller (2) abgewandten Fußende (11) spiralförmig um den Fußschaft (3) bis wenigstens zu der oder jeder dem Auflageteller (2) nächstliegenden Hintergriffnase (10) erstreckt.

2. Spannniet nach Anspruch 1, **dadurch gekennzeichnet, dass** das Fußende (11) umfänglich geschlossen ausgebildet ist.

3. Spannniet nach Anspruch 1 oder Anspruch 2, **dadurch gekennzeichnet, dass** der Gewindering (12) über seine gesamte Länge eine Steigung in Richtung des Auflagetellers (2) aufweist.

4. Spannniet nach Anspruch 3, **dadurch gekennzeichnet, dass** sich der Gewindering (12) in axialer Richtung über die oder jede dem Auflageteller (2) nächstliegende Hintergriffnase (10) hinaus in Richtung des Auflagetellers (2) erstreckt.

5. Spannniet nach Anspruch 1 oder Anspruch 2, **dadurch gekennzeichnet, dass** der Gewindering (12) im Bereich der oder jeder dem Auflageteller (2) nächstbenachbarten Hintergriffnase (10) in einen steigungsfreien Auslaufabschnitt (25) ausläuft.

6. Spannniet nach Anspruch 5, **dadurch gekennzeichnet, dass** zwei mit einem Winkelabstand von weniger als 180 Grad beabstandete Federarme (8, 9) vorhanden sind, die mit in axialer Richtung in einem gleichen Abstand von dem Auflageteller (2) angeordneten Hintergriffnasen (10) ausgebildet sind.

7. Spannniet nach Anspruch 6, **dadurch gekennzeichnet, dass** der Winkelabstand zwischen den Federarmen (8, 9) bei 120 Grad liegt.

8. Spannniet nach Anspruch 5, **dadurch gekennzeichnet, dass** zwei Paare von jeweils diametral einander gegenüber liegenden Federarmen (8, 9; 20, 21) vorhanden sind, wobei die Hintergriffnasen (10) eines Paares von Federarmen (8, 9; 20, 21) in axialer Richtung im gleichen Abstand von dem Auflageteller (2) angeordnet sind, die Abstände bei verschiedenen Paaren von Federarmen (20, 21; 8, 9) jedoch unterschiedlich sind.

## Claims

1. Tension rivet with an insertion body (1) comprising a support plate (2) and a foot shaft (3) connected to the support plate (2), wherein the foot shaft (3) is designed with at least two spring arms (8, 9, 20, 21), each having a back-grip nose (10), and comprising a push-in post (14) which can be pushed into the foot shaft (3) to block the spring arms (8, 9, 20, 21) against spring deflection radially inwardly, **characterised in that** a thread ring (12) is formed on the foot shaft (3), said thread ring extending helically round the foot shaft (3) from a foot end (11) facing away from the support plate (2) as far as at least to the or each back-grip nose (10) lying closest to the support plate (2).

2. Tension rivet according to claim 1, **characterised in that** the foot end (11) is configured peripherally closed.

3. Tension rivet according to claim 1 or claim 2, **characterised in that** the thread ring (12) has a pitch over the entire length thereof in the direction of the support plate (2).

4. Tension rivet according to claim 3, **characterised in that** the thread ring (12) extends in the axial direction beyond the or each back-grip nose (10) lying closest to the support plate (2) in the direction toward the support plate (2).

5. Tension rivet according to claim 1 or claim 2, **characterised in that** the thread ring (12) tapers out in the region of the or each back-grip nose (10) closest to the support plate (2) in a pitch-free taper-out section (25).

6. Tension rivet according to claim 5, **characterised in that** two spring arms (8, 9) with an angular spacing of less than 180 degrees are provided, being designed with back-grip noses (10) arranged with a spacing from the support plate (2) which is the same in the axial direction.

7. Tension rivet according to claim 6, **characterised in that** the angular spacing between the spring arms (8, 9) is 120 degrees.

8. Tension rivet according to claim 5, **characterised in that** two pairs of spring arms (8, 9; 20, 21) are provided, the spring arms of each pair arranged diametrically opposing one another, wherein the back-grip noses (10) of a pair of spring arms (8, 9; 20, 21) are arranged at the same spacing in the axial direction from the support plate (2), the spacings being different, however, for the different pairs of spring arms (20, 21; 8, 9).

## Revendications

1. Rivet de serrage comprenant un élément d'insertion (1) qui est constitué par une collerette d'appui (2) et un pied d'ancrage en position (3) raccordé à la collerette d'appui (3), la pied d'ancrage en position étant en l'occurrence muni d'au-moins deux segments élastiques (8, 9, 20, 21) comportant respectivement un ergot de mise en prise d'accrochage par derrière (10) et comprenant une tige d'emmanchement (14) qui est destinée à être introduite dans le pied d'ancrage en position (3) pour empêcher les segments élastiques (8, 9, 20, 21) de céder par déformation élastique vers l'intérieur dans le plan radial, **caractérisé en ce que** le pied d'ancrage en position (3) est muni d'une volute formant filetage extérieur (12) qui s'étend, suivant un enroulement en forme de spirale, en partant de l'extrémité (11) du pied opposée à la collerette d'appui (2), autour du pied d'ancrage en position (3) jusqu'au-moins l'ergot ou chaque ergot de mise en prise d'accrochage par derrière (10) le plus proche de la collerette d'appui (2).

2. Rivet de serrage selon la revendication 1, **caractérisé en ce que** l'extrémité (11) du pied d'ancrage forme sur toute sa périphérie un tout sans solution de continuité.

3. Rivet de serrage selon la revendication 1 ou la revendication 2, **caractérisé en ce que** la volute formant filetage extérieur (12) définit sur toute sa longueur un pas hélicoïdal orienté dans la direction de la collerette d'appui (2).

4. Rivet de serrage selon la revendication 3, **caractérisé en ce que** la volute formant filetage extérieur (12) s'étend dans le plan axial au-dessus de l'ergot ou de chaque ergot de mise en prise d'accrochage par derrière (10) le plus proche de la collerette d'appui (2) dans la direction de la collerette d'appui (2).

5. Rivet de serrage selon la revendication 1 ou la revendication 2, **caractérisé en ce que** la volute formant filetage extérieur (12) se termine par une portion en amenuisement de fin de filet dans la zone de l'ergot ou de chaque ergot de mise en prise d'accrochage par derrière (10) le plus proche de la collerette d'appui (2).

6. Rivet de serrage selon la revendication 5, **caractérisé en ce qu'**il est prévu deux segments élastiques (8, 9) respectivement écartés l'un de l'autre dans la proportion d'un intervalle angulaire inférieur à 180 degrés, qui sont munis d'ergots de mise en prise d'accrochage par derrière (10) disposés, dans le plan axial, à la même distance de la collerette d'appui (2).

7. Rivet de serrage selon la revendication 6, **caractérisé en ce que** l'intervalle de séparation angulaire des segments élastiques (8, 9) correspond à 120 degrés.

8. Rivet de serrage selon la revendication 5, **caractérisé en ce qu'**il est prévu deux paires de segments élastiques (8, 9 : 20, 21) à disposition diamétralement opposée, les ergots de mise en prise d'accrochage par derrière (10) d'une paire de segments élastiques (8,9 : 20, 21) étant en l'occurrence disposés dans le plan axial à la même distance d'écartement par rapport à la collerette d'appui (2), ces distances d'écartement étant cependant différentes pour des paires de segments élastiques (20, 21 ; 8, 9) différentes.
